# EUROPEAN PATENT SPECIFICATION

(11) **EP 3 925 829 B1**
(45) Date of publication and mention of the grant of the patent: **06.08.2025**
(21) Application number: 21180214.5
(22) Date of filing: 18.06.2021
(51) Int. Cl.: B60R 3/00, E02F 9/08

(54) **IMPROVED STEP LADDER FOR A WORK VEHICLE**
VERBESSERTE TRITTLEITER FÜR EIN ARBEITSFAHRZEUG
ESCABEAU AMÉLIORÉ POUR UN VÉHICULE DE TRAVAIL

(30) Priority: 18.06.2020 IT 202000014665
(43) Date of publication of application: 22.12.2021
(73) Proprietor: CNH Industrial Italia S.p.A., 10156 Torino (IT)
(72) Inventor: FIORENTINO, Attilio, 41030 Bastiglia (MO) (IT); MAMEI, Stefano, 41012 Carpi (IT); PESCIONE, Fabio, 41125 Modena (IT)
(74) Representative: CNH Industrial IP Department

(56) References cited:
- DE-U1- 202014 104 298
- DE-U1- 202017 002 528
- FR-A5- 2 247 079
- GB-A- 1 333 291
- US-A- 4 185 849
- US-B1- 6 655 706

## Description

### TECHNICAL FIELD

The present invention concerns a step ladder for a work vehicle, in particular for an agricultural vehicle such as a tractor or an earth moving machine.

### BACKGROUND OF THE INVENTION

GB 1 333 291 discloses a step ladder for a work vehicle according to the preamble of claim 1.

Work vehicles generally comprise a main body and traction means for allowing the motion of the main body on the ground and one or more step ladders, which are adapted to allow a user to move between distinct points on the main body. For example, tractors are usually provided with a step ladder that allows the user to climb in and out of a cab defined by the main body.

As known, step ladders comprise a frame and one or more steps, which are arranged one above the other along a vertical direction. The steps are preferably at least partially staggered in succession along a transversal direction to both the aforementioned vertical direction and to a movement direction of the vehicle.

In detail, it is possible to define a height of the step ladder, i.e. the total extension of the step ladder along the vertical direction, and a length of the step ladder, i.e. the total extension of the step ladder along the transversal direction. It is further possible to define a slope of the step ladder as the ratio of the height to the length of the step ladder.

As is known, for a given height, a lower slope of the step ladder corresponds to a greater comfort for the user and to a greater length of the step ladder.

However, the length of the step ladder is limited by homologation requirements of the vehicle, which set a maximum transversal encumbrance of work vehicles.

Therefore, the need is felt to obtain an optimized step ladder that can be comfortably used, while at the same time complying with the homologation requirements.

An aim of the present invention is to satisfy the above mentioned needs in a cost effective and optimized manner.

### SUMMARY OF THE INVENTION

The aforementioned aim is reached by a step ladder, as claimed in the appended independent claims.

Preferred embodiments of the invention are realized according to the claims dependent or related to the above independent claims.

### BRIEF DESCRIPTION OF DRAWINGS

For a better understanding of the present invention, a preferred embodiment is described in the following, by way of a non-limiting example, with reference to the attached drawings wherein:
- Figure 1 is a partial perspective view of a work vehicle comprising a step ladder according to the present invention;
- Figure 2 is a perspective view in an enlarged scale of the step ladder according to a first embodiment of the present invention;
- Figures 3, 4 and 5 are cross-sectional lateral views along line H-H of Figure 2 in different respective operative positions;
- Figures 6, 7 and 8 are partial lateral views of the step ladder of Figures 3, 4 and 5;
- Figures 9, 10 and 11 are partial lateral views of the step ladder of Figures 3, 4 and 5; and
- Figures 12 and 13 are partial perspective views of a step ladder according to a second embodiment of the present invention.

### DETAILED DESCRIPTION OF THE INVENTION

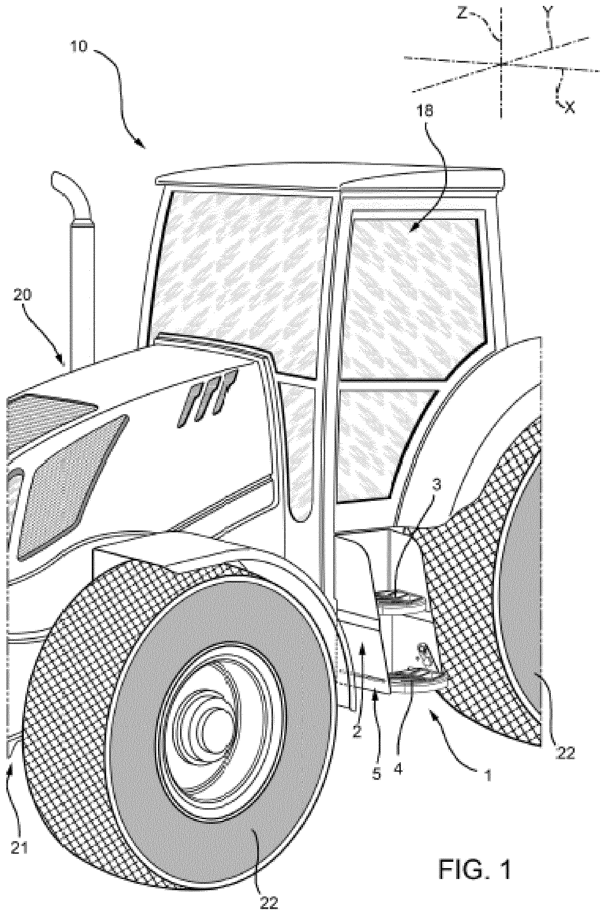

With reference to Figure 1, numeral 10 indicates a work vehicle, in particular an agricultural vehicle, such as a tractor or an earth moving machine.

Work vehicle 10 comprises a main body 20, which preferably defines a cab 18 for the user, an undercarriage 21 and traction means 22, for allowing the motion of main body 20 and undercarriage 21 on the ground, such as wheels or tracks.

The work vehicle 10 further comprises a step ladder 1, which is configured to be fixed to a portion of work vehicle 10. In the embodiment shown, as shown in figure 1, step ladder 1 is arranged in proximity of cab 18 and fixed to the main body 20 of work vehicle 10.

Step ladder 1 essentially comprises a frame 2 configured to be fixed to the aforementioned portion of work vehicle 10 and a plurality of steps 3, 4 carried by frame 2.

Steps 3, 4 are arranged one above the other along a direction Z and extend along a direction Y, which is transversal to direction Z. In the embodiment shown, direction Z is, in use, vertical with respect to the ground and direction Y is perpendicular to direction Z.

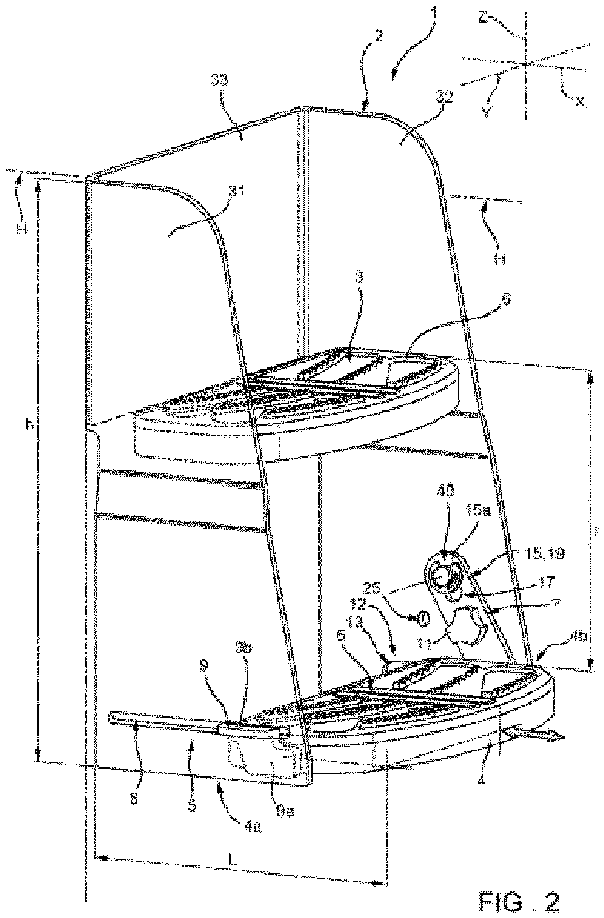

In detail, steps 3, 4 are at least partially staggered along a direction X, which is transversal to directions Z and Y, as shown in figure 2.

In the described embodiment, step ladder 1 is fixed to work vehicle 10 in such a manner that direction Y is substantially parallel to a movement direction of vehicle 10 and exemplarily comprises two steps, namely an upper step 3 and a lower step 4.

Upper and lower steps 3, 4 each comprise a tread 6, which is substantially planar and is adapted to be stepped on by a user of the work vehicle 10. In the embodiment shown, upper and lower steps 3, 4 are carried by frame 2 in such a manner that respective treads 6 extend perpendicularly to direction Z.

The distance along direction Z between respective treads 6 of upper and lower steps 3, 4 defines a rise r between upper and lower steps 3, 4, as shown in figure 2.

It is also possible to define a height h of step ladder 1, i.e. the total extension of step ladder 1 along direction Z, a length L of step ladder 1, i.e. the total extension of step ladder 1 along direction X, and a mean slope α of step ladder 1 as the ratio of height h to length L.

Furthermore, frame 2 comprises a pair lateral supports, which are spaced from each other along direction Y, and which are configured to carry the aforementioned steps 3, 4.

In particular, the lateral supports are wings 31, 32, i.e. comprise a single substantially flat wall, which are spaced from each other along direction Y, namely a left wing 31 and a right wing 32. In the embodiment shown, left and right wings 31, 32 are parallel to each other.

Preferably, frame 2 further comprises a main portion 33, which carries left and right wings 31, 32 and is arranged transversally to these latter. According to the embodiment shown, left and right wings 31, 32 are arranged at respective opposite ends of main portion 33 along direction Y and are rounded to it. Preferably, left and right wings 31, 32 and main portion 33 are formed as a single piece, e.g. in a metallic material. Main portion 33 or wings 31, 32 can be advantageously fixed to the main body 20 of the work vehicle 10 to fix the step ladder 1 to the latter.

Advantageously, one or more steps 3, 4 are movably carried by frame 2, so that they can be slidably adjusted along direction X between a first operative position I and a second operative position II, in order to vary mean slope α between such first and second operative positions I, II.

According to the invention, step ladder 1 further comprises cam means 5, which support in a movable manner a side 4a of one or more steps 3, 4 with respect to frame 2, and fixing means 7, which lock a side 4b of said one or more steps 3, 4 with respect to frame 2 in first or in second operative positions I, II.

In detail, sides 4a and 4b are opposite sides of said one or more step 3, 4 along direction Y, namely right and left sides. In further detail, upper and lower steps 3, 4 are arranged between left and right wings 31, 32 along direction Y so that left side 4a cooperates with left wing 31 and right side 4b cooperates with right wing 32.

In the following, according to the exemplarily embodiment and for sake of clarity, upper step 3 is stationary with respect to frame 2 and lower step 4 is movably carried by frame 2.

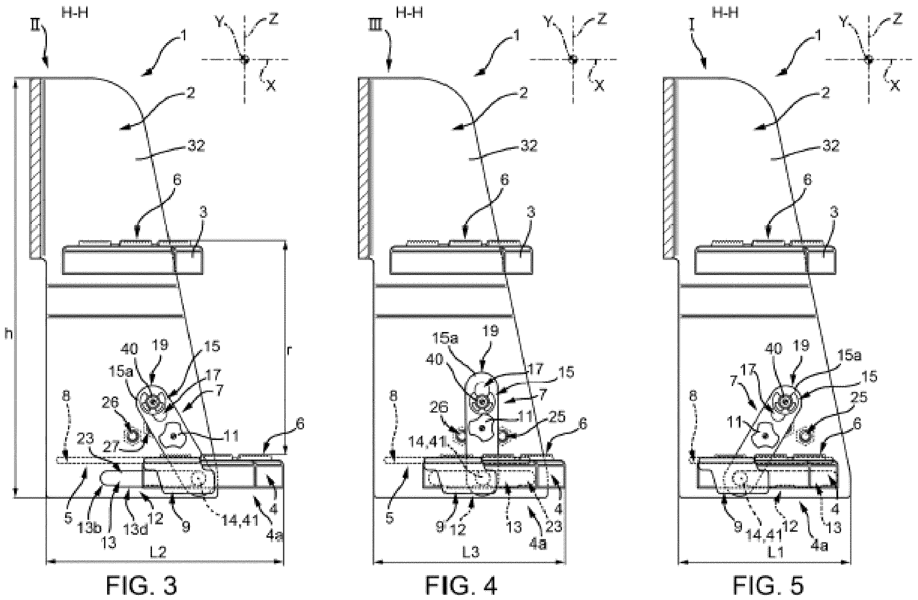

In particular, first operative position I corresponds to a retracted position of lower step 4 with respect to frame 2 (see Figures 5, 8 and 11) and second operative position II corresponds to an advanced position of lower step 4 with respect to frame 2 (see Figures 3, 6 and 9).

According to the above, lower step 4 can assume:
- the first operative position I, in which it is completely arranged within left and right wings 31, 32 along direction X (see Figure 5) thereby defining a length L1 of step ladder 1 in direction X; and
- the second operative position II, in which it is partially arranged within left and right wings 31, 32 along direction X and partially protrudes with respect to left and right wings 31, 32 along direction X (see figure 3), thereby defining a length L2 of step ladder 1 in direction X.

In detail, value L1 is lower than value L2, which is equal to the maximum extension of the step ladder 1 along direction X (see figure 3).

Preferably, lower step 4 is further slidably adjustable in a third operative position III, which is interposed between first and second operative positions I, II along direction X (see figures 4, 7 and 10), thereby defining a length L3 of step ladder 1 in direction X.

In detail, value L3 is lower than value L2 but greater than value L1 (see figure 5). Preferably, third operative position III is arranged in the middle between first and second operative positions I, II along direction X.

Therefore, it is possible to define three values α1, α2 and α3 of mean slope α when lower step 4 is respectively in first, second and third operative positions I, II, III. In detail, value α1 is greater than value α2 and value α2 is greater than value α3.

Furthermore, cam means 5 comprise, in turn, a guide 8 and a slider 9, which is adapted to slide, in use, in guide 8.

In detail, guide 8 is formed in one between frame 2 and lower step 4 and is directed along direction X. In the embodiment shown, guide 8 is conformed as an opening passing through left wing 31 (see figure 2).

Consequently, slider 9 is carried by the other one between frame 2 and lower step 4. In detail, slider 9 is integrally connected to lower step 4, in particular at left side 4a. In further detail, slider 9 is welded to lower step 4.

In the embodiment shown, slider 9 is substantially a pin comprising an attaching portion 9a, which is fixed to left side 4a and an engaging portion 9b, which is adapted to engage guide 8 and protrudes from attaching portion 9a along direction Y. In detail, attaching portion 9a and engaging portion 9b are formed as a single piece.

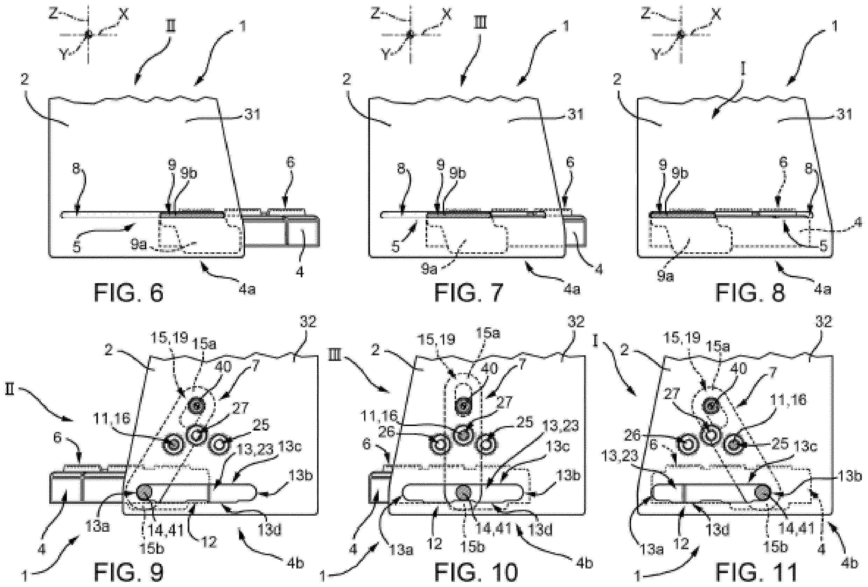

Step ladder 1 further comprises cam means 12 supporting in a movable manner right side 4b of lower step 4 (Figures 9 to 11).

Cam means 12 comprise, in turn, a guide 13 and a slider 14, which is adapted to slide in guide 13 (Figures 9 to 11).

Guide 13 is formed in one between frame 2 and lower step 4 and slider 14 is carried by the other one between frame 2 and lower step 4.

In detail, guide 13 is defined by an opening 23 extending along direction X and passing through right wing 32. Slider 14 is conformed as a pin and is integrally connected to lower step 4. In further detail, slider 14 is welded to right side 4b.

In the exemplarily embodiment, slider 14 is a substantially cylindrical pin while slider 9 is a substantially flat pin.

In particular, opening 23 has a substantially rectangular shape, preferably rounded at its corners, therefore defined by a pair of end walls 13a, 13b, which are opposite to each other along direction X, an upper wall 13c and a lower wall 13d, which are opposite to each other along direction Z.

Opening 23, passing through the right wing 32, allows the insertion of slider 14. End walls 13a, 13b, namely a front wall 13a and a rear wall 13b, define therefore respective abutments for slider 14 along direction X.

In detail, the distance along direction Z between lower wall 13d and upper wall 13c varies along direction X. In particular, lower wall 13d has a height-variable profile parallel to direction Z.

Advantageously, lower wall 13d comprises a plurality of protrusions, which determine the height-variable profile of lower wall 13d along direction Z, in addition, the protrusions extend along direction Z and are directed from lower wall 13d towards upper wall 13c. In detail, such protrusions are arranged at least at three points of lower wall 13d along direction X. In the described embodiment, the three points of lower wall 13d correspond to the first, second and third operative positions I, II and III of lower step 4.

In detail, slider 14 is adapted to slide between front wall 13a, which corresponds to first operative position I of lower step 4 and rear wall 13b, which corresponds to second operative position II of lower step 4.

In further detail, when lower step 4 is in one of first, second and third positions I, II, III, slider 14 simultaneously contacts lower wall 13d at one of the protrusions and upper wall 13c (see figures 9 to 13).

Furthermore, fixing means 7 comprise a coupling element 11 and a pair of seats 25, 26, namely a first seat 25 and a second seat 26, which are realized in one between lower step 4 and frame 2. Preferably, first and second seats 25 and 26 are aligned along direction X and coupling element 11 is configured to selectively engage one of first and second seats 25, 26, to lock the position of lower step 4 with respect to frame 2 in first and second operative positions I, II, respectively.

With reference to the first embodiment depicted in figures 1 to 5, coupling element 11 is threaded element. In detail, first and second seats 25, 26 are threaded holes, which are adapted to be engaged by the thread of coupling element 11.

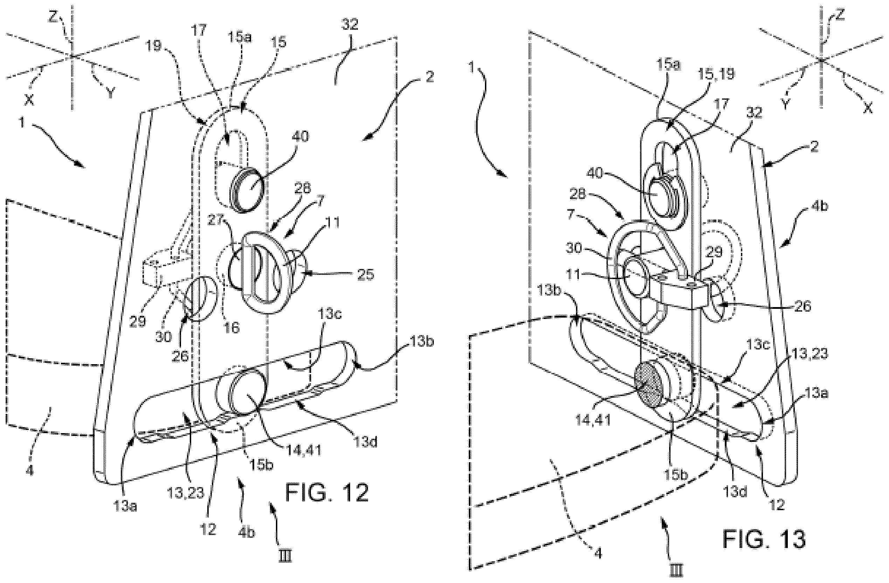

Alternatively, as shown in a second embodiment depicted in figures 12 and 13, coupling element 11 is a pin that can be fixed to right wing 32 via a lynchpin connection 28. In the described embodiment, such lynching connection 28 comprises a dowel 29 configured to be inserted in a through hole realized in the coupling element 11 and that can be maintained in such coupled position by elastic means 30. For sake of brevity, such embodiments will not further be described in detail.

According to a not-shown alternative embodiment, coupling element 11 is carried by one between lower step 4 and frame 2 and first and second seats 25, 26 are formed in the other one between lower step 4 and frame 2.

Fixing means 7 further comprise a third seat 27, which is interposed between first and second seats 25, 26 along direction X. In particular, coupling element 11 is configured to selectively engage third seat 27 to lock, in use, lower step 4 in third operative position III (Figures 4, 10, 12 and 13).

In the described embodiment, third seat 27 is arranged in the middle between first and second seats 25, 26 along direction X. In addition, third seat 27 is arranged at a higher position with respect to first and second seats 25, 26 along direction Z.

Step ladder 1 further comprises a movable connection assembly 19 to movably couple right side 4b with frame 2. Preferably, such movable connection assembly 19 comprises a connecting rod 15.

Connecting rod 15 comprises a first end 15a, which is hinged to frame 2 by means of a first hinge 40 and a second end 15b, which is hinged to slider 14 by means of a second hinge 41. First and second ends 15a, 15b are opposite to each other (Figures 9 to 11).

In particular, fixing means 7 are adapted to lock the position of movable connection assembly 19 with respect to frame 2.

According to the above, fixing means 7 are adapted to lock connecting rod 15 at an intermediate portion between first and second ends 15a, 15b. In detail, connecting rod 15 comprises a hole 16, which is formed at an intermediate portion between first and second ends 15a, 15b (see figures 9 to 12). In further detail, coupling element 11 is adapted to simultaneously engage hole 16 and one of first, second or third seats 25, 26 or 27, to lock lower step 4 in one of first, second or third operative positions I, II, III, respectively.

In addition, connecting rod 15 is also slidable with respect to first hinge 40 (Figures 3 to 5). In detail, connecting rod 15 comprises a slot 17, which is adapted to be slidably engaged by first hinge 40.

As shown in figures 3 to 5, the position of hole 16 along direction Z is variable, as a consequence of the rotation of connecting rod 15 with respect to first hinge 40. In detail, the position of hole 16 along direction Z when step ladder 4 is in third operative positions III is different, in particular higher, from the position of hole 16 when step ladder 4 is in first or in second operative positions I, II.

In particular, as described above, third seat 27 is arranged at a higher position with respect to first and second seats 25, 26 along direction Z in such a manner that, when step ladder 4 is in third operative position III, third seat 27 is aligned with hole 16 and both third seat 27 and hole 16 are simultaneously engageable by coupling element 11.

The operation of the step ladder 1 according to the invention and described as above is the following. In particular, the operation will be described starting from a condition in which lower step 4 is locked in first operative position I. In this condition, length L is equal to value L1 and mean slope α is equal to value α1 (Figure 5).

In order to set lower step 4 in second or in third operative positions II, III, coupling element 11 is disengaged from first seat 25 and lower step 4 is subsequently slid parallel to direction X. Preferably, coupling element 11 is disengaged from first seat 25, while remaining at least partially engaged with hole 16.

While lower step 4 is moved, slider 9 slides in guide 8 and slider 14 slides in guide 13. In detail, slider 14 moves from rear wall 13b towards front wall 13a.

In addition, connecting rod 15 rotates with respect to first and second hinges 40, 41 and slides with respect to first hinge 40. In detail, slot 17 slides with respect to first hinge 40.

Once lower step 4 reaches second or third operative positions II, III, lower step 4 is subsequently locked with respect to frame 2 by fixing means 7. In detail, coupling element 11 engages second or third seats 26, 27, while being engaged with hole 16. As a consequence, connecting rod 15 is also locked with respect to frame 2.

In detail, when lower step 4 is set in second operative position II, length L is equal to value L2 and mean slope α is equal to value α2. When lower step 4 is set in third operative position III, length L is equal to value L3 and mean slope α is equal to value α3.

The above operation is a manual operation of the step ladder 1. Clearly, it can be foreseen to provide step ladder 1 with automatic actuation means for automatically slidably moving lower step 4 with respect to frame 2 and automatically engaging or disengaging fixing means 7.

In view of the foregoing, the advantages of step ladder 1 according to the invention are apparent.

In particular, since lower step 4 is movably carried by frame 2 so that it can be slidably adjustable along direction X between first and second operative positions I, II, length L and mean slope α of step ladder 1 can be easily varied depending on the user's needs.

Accordingly, step ladder 1 can be comfortably used, while complying with the homologation requirements of work vehicle 1.

In fact, when lower step 4 is in first operative position I, the encumbrance of work vehicle 1 parallel to direction X is minimized so as to meet the homologation requirements and mean slope α is equal to its maximum value, i.e. α1.

On the contrary, when lower step 4 is in second operative position II, the encumbrance of work vehicle 1 parallel to direction X is maximized and mean slope α is equal to its minimum value, i.e. α2, and the user's comfort is maximized.

Furthermore, since cam means 5 support in a movable manner left side 4a with respect to frame 2 and fixing means 7 lock right side 4b with respect to frame 2, it is possible to adjust the position of lower step 4 without completely removing it from frame 2.

In case of automatic sliding of lower step 4 and engaging/disengaging of the fixing means 7, the passage between the different operative positions I, II, III of lower step 4 can be realized in a totally automatic way without any intervention of the user.

It is clear that modifications can be made to the described step ladder 1 which do not extend beyond the scope of protection defined by the claims.

In particular, lower step 4 could be continuously slidably adjustable in a plurality of positions between first and second operative positions I, II along direction X. In other words, third operative position III may correspond to any one of the plurality of other positions between first and second operative positions I, II along direction X.

## Claims

1. Step ladder (1) for a work vehicle (10), comprising a frame (2) configured to be fixed to a portion of said work vehicle (10) and a plurality of steps (3; 4) carried by said frame (2);
said plurality of steps (3; 4) being arranged one above the other along a first direction (Z) and extending along a second direction (Y) transversal to said first direction (Z);
wherein at least one (4) among said steps (3; 4) is movably carried by said frame (2) so that it can be slidably adjustable along a third direction (X) between at least a first and a second operative positions (I, II); said third direction (X) being transversal to said first and second directions (Z, Y);
said step ladder (1) further comprising first cam means (5) and fixing means (7), said first cam means (5) supporting in a movable manner a first side (4a; 4b) of said at least one step (4) with respect to said frame (2) and said fixing means (7) locking a second side (4b; 4a) of said at least one step (4) with respect to said frame (2) in said at least first and second operative positions (I, II),
said step ladder is **characterized in that** said fixing means (7) comprise a coupling element (11) and at least two seats (25, 26) realized in one between said at least one step (4) and said frame (2) along said third direction (X), said coupling element (11) being configured to selectively engage one of said seats (25, 26) to lock, in use, the position of said at least one step (4) with respect to said frame (2).

2. Step ladder according to claim 1, wherein said first cam means (5) comprise at least one first guide (8) and at least one first slider (9), which is adapted to slide, in use, in said at least one first guide (8);
said at least one first guide (8) being formed in one between said frame (2) and said at least one step (4); said at least one first slider (9) being carried by the other one between said frame (2) and said at least one step (4).

3. Step ladder according to claim 2, wherein said at least one first guide (8) extends along said third direction (X).

4. Step ladder according to any one of the foregoing claims, wherein said first and second sides (4a, 4b; 4b, 4a) are opposite sides of said at least one step (4) along said second direction (Y).

5. Step ladder according to any one of the foregoing claims, wherein said frame (2) comprises at least a first support element (31) and a second support element (32), which are spaced from each other along said second direction (Y);
said plurality of steps (3; 4) being arranged between said first and second support elements (31, 32) along said second direction (Y) so that said first side (4a; 4b) cooperates, in use, with said first support element (31) and said second side (4b; 4a) cooperates, in use, with said second support element (32).

6. Step ladder according to claim 5, wherein said fixing means (7) comprise a further seat (27), which is interposed between said at least two seats (25, 26) along said third direction (X); said coupling element (11) being configured to selectively engage said further seat (27) to lock, in use, the position of said at least one step (4) in a third operative position (III) with respect to said frame (2).

7. Step ladder according to any one of the foregoing claims, comprising second cam means (12) supporting in a movable manner said second side (4b; 4a).

8. Step ladder according to claim 7, wherein said second cam means (12) comprise at least one second guide (13) and at least one second slider (14), which is adapted to slide in said at least one second guide (13);
said at least one second guide (13) being formed in one between said frame (2) and said at least one step (4); said at least one second slider (14) being carried by the other one between said frame (2) and said at least one step (4).

9. Step ladder according to claim 8, wherein said at least one second guide (13) is delimited along said first direction (Z) by a first wall (13c) and a second wall (13d), which are opposite to each other;
one (13d) between said first and second walls (13c, 13d) having a profile variable along said first direction (Z), so that a distance between said first and second walls (13c, 13d) along said first direction (Z) is variable along said third direction (X).

10. Step ladder according to any one of the foregoing claims, further comprising a movable connection assembly (19) adapted to movably couple said second side (4b; 4a) with said frame (2);
said fixing means (7) being adapted to lock the position of said movable connection assembly (19) with respect to said frame (2).

11. Step ladder according to claim 10, when depending on any one of claims 9 or 10, wherein said movable connection assembly (19) comprises a connecting rod (15);
said connecting rod (15) comprising a first end (15a), which is hinged to said frame (2) by means of a first hinge (40) and a second end (15b), which is hinged to said at least one second slider (14) by means of a second hinge (41);
said fixing means (7) locking said connecting rod (15) at an intermediate portion between said first end (15a) and said second end (15b).

12. Step ladder according to any one of claims 6 to 11, wherein said coupling element (11) comprises a pin fixable via a lynchpin (28) in one of said two seats (25, 26) or said further seat (27).

13. Step ladder according to any one of claims 6 to 11, wherein said coupling element (11) comprises a pin provided with a thread configured to cooperate with a respective thread realized in said two seats (25, 26) and said further seat (27).

14. A work vehicle (10) comprising:
- a main body (20);
- an undercarriage (21)
- traction means (22), for allowing the motion of said main body (20) and said undercarriage (21) on the ground; and
- a step ladder (1) according to any one of the foregoing claims configured to be fixed to a portion of said work vehicle (10).

## Patentansprüche

1. Trittleiter (1) für ein Arbeitsfahrzeug (10) umfassend einen Rahmen (2), der dazu eingerichtet ist, an einem Teil des Arbeitsfahrzeugs (10) befestigt zu werden, und eine Mehrzahl von Stufen (3; 4), die von dem Rahmen (2) getragen werden;
wobei die Mehrzahl von Stufen (3; 4) entlang einer ersten Richtung (Z) übereinander angeordnet ist und sich entlang einer zweiten Richtung (Y) erstreckt, die quer zu der ersten Richtung (Z) verläuft;
wobei zumindest eine (4) der Stufen (3; 4) beweglich von dem Rahmen (2) getragen wird, sodass sie entlang einer dritten Richtung (X) zwischen zumindest einer ersten und einer zweiten Betriebsposition (I, II) verschiebbar einstellbar sein kann; wobei die dritte Richtung (X) quer zu der ersten und der zweiten Richtung (Z, Y) verläuft;
wobei die Trittleiter (1) weiterhin erste Nockenmittel (5) und Befestigungsmittel (7) umfasst, wobei die ersten Nockenmittel (5) eine erste Seite (4a; 4b) der zumindest einen Stufe (4) bezüglich des Rahmens (2) beweglich lagern und die Befestigungsmittel (7) eine zweite Seite (4b; 4a) der zumindest einen Stufe (4) in der zumindest einen ersten und zweiten Betriebsposition (I, II) bezüglich des Rahmens (2) verriegeln,
wobei die Trittleiter **dadurch gekennzeichnet ist, dass** die Befestigungsmittel (7) ein Verbindungselement (11) und zumindest zwei Aufnahmen (25, 26) umfassen, die in der zumindest einen Stufe (4) oder in dem Rahmen (2) entlang der dritten Richtung (X) ausgebildet sind, wobei das Verbindungselement (11) dazu eingerichtet ist, wahlweise in eine der Aufnahmen (25, 26) einzugreifen, um während des Gebrauchs die Position der zumindest einen Stufe (4) relativ zu dem Rahmen (2) zu verriegeln.

2. Trittleiter nach Anspruch 1, wobei die ersten Nockenmittel (5) zumindest eine erste Führung (8) und zumindest einen ersten Schieber (9) umfassen, der dazu eingerichtet ist, sich während des Gebrauchs in der ersten Führung (8) zu verschieben;
wobei die zumindest eine erste Führung (8) in einem aus dem Rahmen (2) und der zumindest einen Stufe (4) ausgebildet ist; und wobei der zumindest eine erste Schieber (9) an dem anderen aus dem Rahmen (2) und der zumindest einen Stufe gelagert ist.

3. Trittleiter nach Anspruch 2, wobei die zumindest eine erste Führung (8) sich entlang der dritten Richtung (X) erstreckt.

4. Trittleiter nach einem der vorhergehenden Ansprüche, wobei die erste und die zweite Seite (4a, 4b; 4b, 4a) sich in der zweiten Richtung (Y) gegenüberliegende Seiten der zumindest einen Stufe (4) sind.

5. Trittleiter nach einem der vorhergehenden Ansprüche, wobei der Rahmen (2) zumindest ein erstes Tragelement (31) und ein zweites Tragelement (32) umfasst, die entlang der zweiten Richtung (Y) zueinander beabstandet sind;
wobei die Mehrzahl von Stufen (3; 4) zwischen dem ersten und dem zweiten Tragelement (31, 32) entlang der zweiten Richtung (Y) angeordnet ist, sodass die erste Seite (4a; 4b) im Gebrauch mit dem ersten Tragelement (31) zusammenwirkt und die zweite Seite (4b; 4a) im Gebrauch mit dem zweiten Tragelement (32) zusammenwirkt.

6. Trittleiter nach Anspruch 5, wobei die Befestigungsmittel (7) eine weitere Aufnahme (27) umfassen, die entlang der dritten Richtung (X) zwischen den zumindest zwei Aufnahmen (25, 26) angeordnet ist; wobei das Verbindungselement (11) dazu eingerichtet ist, wahlweise in die weitere Aufnahme (27) einzugreifen, um im Gebrauch die Position der zumindest einen Stufe (4) in einer dritten Betriebsposition (III) relativ zu dem Rahmen (2) zu verriegeln.

7. Trittleiter nach einem der vorhergehenden Ansprüche, umfassend zweite Nockenmittel (12), die die zweite Seite (4b; 4a) beweglich lagern.

8. Trittleiter nach Anspruch 7, wobei die zweiten Nockenmittel (12) zumindest eine zweite Führung (13) und zumindest einen zweiten Schieber (14) umfassen, der dazu eingerichtet ist, sich in der zumindest einen zweiten Führung (13) zu verschieben;
wobei die zumindest eine zweite Führung (13) in einem aus dem Rahmen (2) und der zumindest einen Stufe (4) ausgebildet ist; und wobei der zumindest eine zweite Schieber (14) an dem anderen aus dem Rahmen (2) und der zumindest einen Stufe gelagert ist.

9. Trittleiter nach Anspruch 8, wobei die zumindest eine zweite Führung (13) in der ersten Richtung (Z) durch eine erste Wand (13c) und eine zweite Wand (13d) begrenzt ist, die einander gegenüberliegen;
wobei eine (13d) aus der ersten und der zweiten Wand (13c, 13d) ein in der ersten Richtung (Z) veränderliches Profil aufweist, sodass ein Abstand zwischen der ersten und der zweiten Wand (13c, 13d) in der ersten Richtung (Z) sich entlang der dritten Richtung (X) verändert.

10. Trittleiter nach einem der vorhergehenden Ansprüche, weiterhin umfassend eine bewegliche Verbindungsanordnung (19), die dazu eingerichtet ist, die zweite Seite (4b; 4a) beweglich mit dem Rahmen (2) zu verbinden;
wobei die Befestigungsmittel (7) dazu eingerichtet sind, die Position der beweglichen Verbindungsanordnung (19) relativ zu dem Rahmen (2) zu verriegeln.

11. Trittleiter nach Anspruch 10, in Abhängigkeit von einem der Ansprüche 9 und 10, wobei die bewegliche Verbindungsanordnung (19) eine Verbindungsstange (15) umfasst;
wobei die Verbindungsstange (15) ein erstes Ende (15a) aufweist, das über ein erstes Gelenk (40) an dem Rahmen (2) angelenkt ist, und ein zweites Ende (15b) aufweist, das über ein zweites Gelenk (41) an dem zumindest einen zweiten Schieber (14) angelenkt ist;
wobei die Befestigungsmittel (7) die Verbindungsstange (15) an einem Zwischenabschnitt zwischen dem ersten Ende (15a) und dem zweiten Ende (15b) verriegeln.

12. Trittleiter nach einem der Ansprüche 6 bis 11, wobei das Verbindungselement (11) einen Stift umfasst, der mittels eines Splints (28) in einer der zwei Aufnahmen (25, 26) oder der weiteren Aufnahme (27) fixierbar ist.

13. Trittleiter nach einem der Ansprüche 6 bis 11, wobei das Verbindungselement (11) einen mit einem Gewinde versehenen Stift umfasst, der dazu eingerichtet ist, mit einem entsprechenden Gewinde in den zwei Aufnahmen (25, 26) und der weiteren Aufnahme (27) zusammenzuwirken.

14. Arbeitsfahrzeug (10), umfassend:
- einen Hauptkörper (20);
- ein Fahrgestell (21);
- Antriebsmittel (22), um die Bewegung des Hauptkörpers (20) und des Fahrgestells (21) auf dem Boden zu ermöglichen; und
- eine Trittleiter (1) nach einem der vorhergehenden Ansprüche, die dazu eingerichtet ist, an einem Teil des Arbeitsfahrzeugs (10) befestigt zu werden.

## Revendications

1. Marchepied (1) pour un véhicule de travail (10), comprenant un châssis (2) configuré pour être fixé à une partie dudit véhicule de travail (10) et une pluralité de marches (3 ; 4) soutenues par ledit châssis (2) ;
les marches de ladite pluralité de marches (3 ; 4) étant disposées les unes au-dessus des autres le long d'une première direction (Z) et s'étendant le long d'une deuxième direction (Y) transversale par rapport à ladite première direction (Z) ;
dans lequel au moins une (4) parmi lesdites marches (3 ; 4) est soutenue de manière mobile par ledit châssis (2) de sorte qu'elle puisse être ajustée de manière coulissante le long d'une troisième direction (X) entre au moins une première et une deuxième position fonctionnelle (I, II) ; ladite troisième direction (X) étant transversale par rapport à la première et à la deuxième direction (Z, Y) ;
ledit marchepied (1) comprend en outre un premier mécanisme à came (5) et des moyens de fixation (7), ledit premier mécanisme à came (5) supportant de manière mobile un premier côté (4a ; 4b) de ladite au moins une marche (4) par rapport audit châssis (2) et lesdits moyens de fixation (7) verrouillant un second côté (4b ; 4a) de ladite au moins une marche (4) par rapport audit châssis (2) dans lesdites au moins première et deuxième positions fonctionnelles (I, II),
ledit marchepied est **caractérisé en ce que** lesdits moyens de fixation (7) comprennent un élément de couplage (11) et au moins deux surfaces d'appui (25, 26) aménagées l'une entre ladite au moins une marche (4) et ledit châssis (2) le long de ladite troisième direction (X), ledit élément de couplage (11) étant configuré pour engager de manière sélective l'une desdites surfaces d'appui (25, 26) afin de verrouiller, en utilisation, la position de ladite au moins une marche (4) par rapport audit châssis (2).

2. Marchepied selon la revendication 1, dans lequel ledit premier mécanisme à came (5) comprend au moins un premier guide (8) et au moins une première glissière (9), qui est adaptée pour coulisser, en utilisation, dans ledit au moins un premier guide (8) ;
ledit au moins un premier guide (8) étant formé dans l'un entre ledit châssis (2) et ladite au moins une marche (4) ; ladite au moins une première glissière (9) étant portée par l'autre entre ledit châssis (2) et ladite au moins une marche (4).

3. Marchepied selon la revendication 2, dans lequel ledit au moins un premier guide (8) s'étend le long de la troisième direction (x).

4. Marchepied selon l'une quelconque des revendications précédentes, dans lequel lesdits premier et second côtés (4a, 4b ; 4b, 4a) sont des côtés opposés de ladite au moins une marche (4) le long de ladite deuxième direction (Y).

5. Marchepied selon l'une quelconque des revendications précédentes, dans lequel ledit châssis (2) comprend au moins un premier élément de soutien (31) et un second élément de soutien (32), qui sont espacés l'un de l'autre le long de ladite deuxième direction (Y) ;
les marches de ladite pluralité de marche (3 ; 4) étant disposées entre lesdits premier et second éléments de soutien (31, 32) le long de ladite deuxième direction (Y) de sorte que ledit premier côté (4a ; 4b) fonctionne, en utilisation, de concert avec ledit premier élément de soutien (31) et ledit second côté (4b ; 4a) fonctionne, en utilisation, de concert avec ledit second élément de soutien (32).

6. Marchepied selon la revendication 5, dans lequel lesdits moyens de fixation (7) comprennent une surface d'appui supplémentaire (27), qui est interposée entre lesdites au moins deux surfaces d'appui (25, 26) le long de ladite troisième direction (X) ; ledit élément de couplage (11) étant configuré pour engager de manière sélective ladite surface d'appui supplémentaire (27) afin de verrouiller, en utilisation, la position de ladite au moins une marche (4) dans une troisième position fonctionnelle (III) par rapport audit châssis (2).

7. Marchepied selon l'une quelconque des revendications précédentes, comprenant un second mécanisme à came (12) soutenant de manière mobile ledit second côté (4b ; 4a).

8. Marchepied selon la revendication 7, dans lequel ledit second mécanisme à came (12) comprend au moins un second guide (13) et au moins une seconde glissière (14), qui est adaptée pour coulisser dans ledit au moins un second guide (13) ;
ledit au moins un second guide (13) étant formé dans l'un entre ledit châssis (2) et ladite au moins une marche (4) ; ladite au moins une seconde glissière (14) étant portée par l'autre entre ledit châssis (2) et ladite au moins une marche (4).

9. Marchepied selon la revendication 8, dans lequel ledit au moins un second guide (13) est délimité le long de ladite première direction (Z) par une première paroi (13c) et une seconde paroi (13d), qui sont l'une en face de l'autre ;
l'une (13d) entre lesdites première et seconde parois (13c, 13d) ayant un profil variable le long de ladite première direction (Z), de sorte qu'une distance entre lesdites première et seconde parois (13c, 13d) le long de ladite première direction (Z) est variable le long de ladite troisième direction (X).

10. Marchepied selon l'une quelconque des revendications précédentes, comprenant en outre un ensemble de raccordement mobile (19) adapté pour coupler de manière mobile ledit second côté (4b ; 4a) avec ledit châssis (2) ;
lesdits moyens de fixation (7) étant adaptés pour verrouiller la position dudit ensemble de raccordement mobile (19) par rapport audit châssis (2).

11. Marchepied selon la revendication 10, lorsqu'elle dépend de l'une quelconque de la revendication 9 ou de la revendication 10, dans lequel ledit ensemble de raccordement mobile (19) comprend une bielle (15) ;
ladite bielle (15) comprenant une première extrémité (15a), qui est articulée sur ledit châssis (2) au moyen d'une première articulation (40) et une seconde extrémité (15b), qui est articulée sur ladite au moins une seconde glissière (14) au moyen d'une seconde articulation (41) ;
lesdits moyens de fixation (7) bloquant ladite bielle (15) dans une partie intermédiaire entre ladite première extrémité (15a) et ladite seconde extrémité (15b).

12. Marchepied selon l'une quelconque des revendications 6 à 11, dans lequel ledit élément de couplage (11) comprend une broche pouvant être fixée par le biais d'une goupille Lynch (28) dans l'une desdites deux surfaces d'appui (25, 26) ou ladite autre surface d'appui (27).

13. Marchepied selon l'une quelconque des revendications 6 à 11, dans lequel ledit élément de couplage (11) comprend une goupille munie d'un filetage configuré pour fonctionner de concert avec un filetage respectif réalisé dans lesdites deux surfaces d'appui (25, 26) et ladite autre surface d'appui (27).

14. Un véhicule de travail (10) comprenant :
- un corps principal (20) ;
- un train de roulement (21)
- des moyens de traction (22), pour permettre le déplacement dudit corps principal (20) et dudit train de roulement (21) sur le sol ; et
- un marchepied (1) selon l'une quelconque des revendications précédentes configuré pour être fixé sur une partie dudit véhicule de travail (10).
